# EUROPEAN PATENT SPECIFICATION

(11) **EP 3 136 508 B1**
(45) Date of publication and mention of the grant of the patent: **15.05.2019**
(21) Application number: 14892752.8
(22) Date of filing: 23.05.2014
(51) Int. Cl.: H01Q 25/00, H04B 7/06

(54) **MULTI-BEAM FORMING DEVICE AND BASE STATION**
VORRICHTUNG ZUR MEHRSTRAHLFORMUNG UND BASISSTATION
DISPOSITIF DE FORMATION DE FAISCEAU MULTIPLE ET STATION DE BASE

(43) Date of publication of application: 01.03.2017
(73) Proprietor: Huawei Technologies Co., Ltd., Longgang District Shenzhen, Guangdong 518129 (CN)
(72) Inventor: WANG, Yi, Shenzhen City Guangdong 518129 (CN); ZHAO, Jianping, Shenzhen City Guangdong 518129 (CN); BI, Xiaoyan, Shenzhen City Guangdong 518129 (CN)
(74) Representative: Körber, Martin Hans
(86) International application number: PCT/CN2014/078307
(87) International publication number: WO 2015/176316

(56) References cited:
- CN-A- 102 917 397
- CN-A- 103 594 823
- CN-A- 103 765 940
- US-A1- 2007 263 748
- US-A1- 2012 309 325
- US-A1- 2012 309 331
- US-B2- 8 045 926

## Description

### TECHNICAL FIELD

The present invention relates to the field of wireless communications, and specifically, to a multi-beam forming apparatus and a base station.

### BACKGROUND

Spectral efficiency is improved by means of a multiple-input multiple-output MIMO technology. In a conventional MIMO antenna system, a radio frequency signal first passes through a power amplifier disposed below an antenna, and then is fed into the antenna after passing through a cable. In large-scale MIMO, a cable-caused loss increases significantly because of an increase in a quantity of antennas, and therefore, a problem of low energy utilization efficiency becomes serious. During large-scale antenna deployment, a scenario requirement needs to be considered, and antenna distribution is adapted to various soft and hard aggregation technologies. A large-granularity design module is easy for installation, but is of low use efficiency, and an excessive small granularity of modules increases a construction cost per unit. In addition, a cost of a radio frequency channel serving as an active device is far greater than a cost of antenna construction. The large-scale MIMO uses various aggregation technologies, impact of a damaged antenna on performance is particularly evident, and repairability of a design is also an issue that needs to be considered.

To resolve a problem that a quantity and spatial positions of antennas may be flexibly changed, a concept of a radio frequency-antenna unit is set forth. An antenna and a radio frequency channel pair are integrated in each unit, and the radio frequency channel pair includes a duplexer, and has changeable power. Small units may be spatially combined into a required shape according to a requirement. Therefore, various hierarchical or reuse combinations can be made conveniently without wasting extra antennas or radio frequency channels. This solution also resolves a problem of a cable-caused loss from a radio frequency power amplifier to an antenna. The solution of unitization of an antenna and a radio frequency module is expandable, replaceable, and of flexible configuration, and a deployment cost is relatively low. However, a defect is that each unit includes an antenna and a radio frequency module, and a huge quantity of antennas means that a lot of radio frequency modules are simultaneously deployed, and a cost of the radio frequency modules is far greater than a cost of antenna modules. During transmit precoding, all precoding processes need to be performed on a baseband side because of a one-to-one correspondence between antennas and radio frequency channels, and an algorithm on a baseband is very complex.

US 2012/309331 A1 discloses a modular millimeter-wave radio frequency (RF) system comprising a plurality of active antenna arrays and RF sub-modules, wherein the RF sub-modules are chained to each other through a transmission line and one of the RF sub-modules is connected to a baseband module.

US 2012/309325 A1 provides a transceiver including a baseband module and a radio frequency module connected by a coaxial cable, wherein the coaxial cable carries a control signal. In another embodiment, a plurality of RF modules are connected to the baseband module.

US 2007/263748 A1 discloses an apparatus comprising: a plurality of antenna elements and digital signal processing devices for supplying phase-and-amplitude-weighted digital baseband signals, and a beamforming processor.

### SUMMARY

An objective of the present invention is to provide a multi-beam forming apparatus, so as to facilitate joining of a plurality of multi-beam forming apparatuses in a base station by using a modular multi-beam forming apparatus.

According to a first aspect, the present invention provides a base station, which includes S multi-beam forming apparatuses, wherein S is a natural number greater than 1, wherein each multi-beam forming apparatus includes: a phased array submodule, an interface module, and at least one radio frequency channel submodule, where
the interface module is configured to transmit a baseband signal of a baseband data unit external to the base station to the radio frequency channel submodule; the radio frequency channel submodule is configured to convert the baseband signal received by the interface module from the outside into a radio frequency signal, and to send the radio frequency signal to the phased array submodule; and the phased array submodule is configured to perform beam forming on the radio frequency signal sent by the radio frequency channel submodule, and then to send, by using an antenna array, the radio frequency signal obtained after the beam forming;
wherein the interface module of each multi-beam forming apparatus further comprises a multi-module expansion interface that is connected to the multi-module expansion interface of another multi-beam forming apparatus of the base station; and wherein the multi-module expansion interface further comprises: a clock synchronization interface for clock synchronization among a plurality of multi-beam forming apparatuses, a frequency synchronization interface for frequency synchronization among a plurality of multi-beam forming apparatuses that are combined, and a multi-module correction interface for physical signal correction among a plurality of multi-beam forming apparatuses that are combined.

With reference to the first aspect, in a first possible implementation manner, the phased array submodule of each multi-beam forming apparatus is configured to send a radio frequency signal received from the antenna array to the corresponding radio frequency channel submodule; the radio frequency channel submodule is configured to convert the radio frequency signal received by the phased array submodule into a baseband signal, and then to send the baseband signal to the corresponding interface module; and the interface module is configured to output the baseband signal to the external baseband data unit.

With reference to the first aspect, in a second possible implementation manner, the radio frequency channel submodule of each multi-beam forming apparatus includes a transmit signal processing unit; the transmit signal processing unit includes a first intermediate frequency processor, a digital-to-analog converter, an up-conversion mixer, and a power amplifier; the first intermediate frequency processor is configured to receive the baseband signal transmitted by the corresponding interface module, to perform intermediate frequency processing on the baseband signal, and then to send the baseband signal obtained after the intermediate frequency processing to the digital-to-analog converter; the digital-to-analog converter is configured to convert the baseband signal obtained after the intermediate frequency processing into an analog signal, and to send the analog signal to the up-conversion mixer; the up-conversion mixer is configured to convert the analog signal of intermediate frequency into the radio frequency signal; and to send the radio frequency signal to the corresponding phased array submodule by using a duplexer.

With reference to the first possible implementation manner of the first aspect, in a third possible implementation manner, the radio frequency channel submodule of each multi-beam forming apparatus further includes a receive signal processing unit; the receive signal processing unit includes a second intermediate frequency processor, an analog-to-digital converter, a down-conversion mixer, and a low noise amplifier; the low noise amplifier is configured to perform low noise amplification processing on an antenna signal received by a duplexer from the corresponding phased array submodule, and then to send the antenna signal obtained after the low noise amplification processing to the down-conversion mixer; the down-conversion mixer is configured to process the antenna signal obtained after the low noise amplification processing to obtain an intermediate frequency analog signal, and to send the intermediate frequency analog signal to the analog-to-digital converter; the analog-to-digital converter is configured to convert the intermediate frequency analog signal into an intermediate frequency digital signal, and then to send the intermediate frequency digital signal to the second intermediate frequency processor; the second intermediate frequency processor is configured to convert the intermediate frequency digital signal into the baseband signal; and the corresponding interface module is configured to transmit the baseband signal to the external baseband data unit.

With reference to the first aspect, or the first, the second or the third possible implementation manner of the first aspect, in a fourth possible implementation manner, the interface module of each multi-beam forming apparatus further includes a baseband signal transmission interface configured to transmit the baseband signal.

With reference to the first aspect, or any of the first to the fourth possible implementation manner of the first aspect, in a fifth possible implementation manner, the S multi-beam forming apparatuses are connected to an external baseband data unit by using baseband signal transmission interfaces of the S multi-beam forming apparatuses; one of the S multi-beam forming apparatuses is a primary module, and other (S-1) multi-beam forming apparatuses are secondary modules; wherein the primary module is configured to output: a clock signal, a frequency synchronization signal, and a channel correction signal to at least one secondary module by using the multi-module expansion interface.

With reference to the fifth possible implementation manner of the first aspect, in a sixth possible implementation manner, the multi-module expansion interface of the primary module of the S multi-beam forming apparatuses is connected to multi-module expansion interfaces of at least two secondary modules, and the at least two secondary modules are configured to receive from the primary module, by using the multi-module expansion interfaces of the at least two secondary modules: the clock signal, the frequency synchronization signal, and the channel correction signal.

With reference to the fifth possible implementation manner of the first aspect, in a seventh possible implementation manner, the S multi-beam forming apparatuses are connected in a chain by using the multi-module expansion interfaces of the S multi-beam forming apparatuses.

According to the base station provided in the present invention, a general beam forming apparatus is modularized, so that a plurality of modules or an extremely large quantity of modules can be rapidly combined and joined to meet different application arrangement requirements, which avoids complex integrated design.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a structural block diagram of a multi-beam forming apparatus according to an embodiment of the present invention;
FIG. 2 is a structural diagram of an embodiment of a multi-beam forming apparatus according to an embodiment of the present invention;
FIG. 3 is a structural diagram of an embodiment of a multi-beam forming apparatus according to an embodiment of the present invention;
FIG. 4 is a structural diagram of an embodiment of a radio frequency channel submodule according to an embodiment of the present invention;
FIG. 5 is a schematic structural diagram of another embodiment of a base station according to an embodiment of the present invention;
FIG. 6 is a schematic structural diagram of still another embodiment of a base station according to an embodiment of the present invention;
FIG. 7 is a schematic structural diagram of yet another embodiment of a base station according to an embodiment of the present invention;
FIG. 8 is a schematic diagram of combination of a plurality of multi-beam forming apparatuses according to an embodiment of the present invention; and
FIG. 9 is a schematic diagram of combination of a plurality of multi-beam forming apparatuses according to an embodiment of the present invention.

### DESCRIPTION OF EMBODIMENTS

The following further describes the embodiments of the present invention in detail with reference to the accompanying drawings.

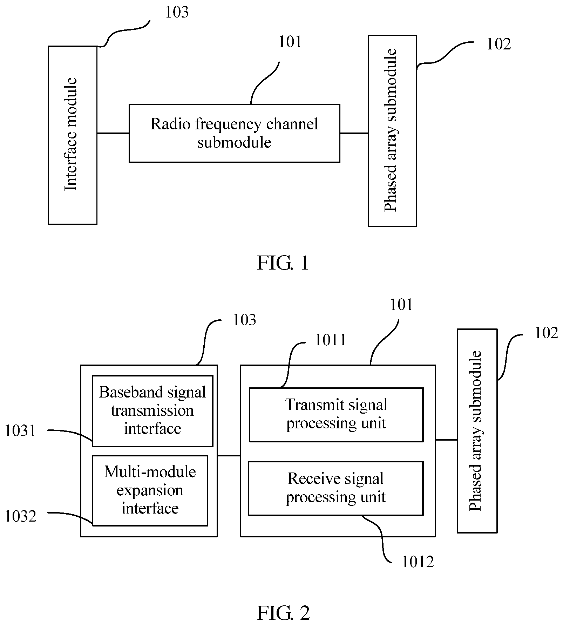

As shown in FIG. 1, an embodiment of the present invention provides a multi-beam forming transceiver apparatus. It can be seen from FIG. 1 that, in this embodiment, at least one radio frequency channel submodule 101, a phased array submodule 102, and an interface module 103 are included, where the phased array submodule 102 includes at least two antenna array elements.

The radio frequency channel submodule 101 converts a baseband signal received by the interface module 103 from the outside into a radio frequency signal, and sends the radio frequency signal to the phased array submodule 102; and converts a radio frequency signal received by the phased array submodule 102 by using the antenna array elements into a baseband signal. The baseband signal is output to an external baseband data unit by using the interface module 103.

The phased array submodule 102 performs beam forming on the radio frequency signal sent by the radio frequency channel submodule 101, and then sends, by using an antenna, the radio frequency signal obtained after the beam forming; and sends data received from the antenna to the radio frequency channel submodule 102.

The interface module 103 transmits the baseband signal between the radio frequency channel submodule 101 and the external baseband data unit, and performs multi-module expansion combination with another apparatus.

A quantity of antenna array elements included in the phased array submodule 102 is far greater than a quantity of radio frequency (Radio Frequency, RF) channel submodules 101 in the multi-beam forming transceiver apparatus, so that a quantity of RF channels that need to be calibrated is reduced. The phased array submodule implements weighting on the radio frequency signal, and after a plurality of beams is formed, the plurality of beams is transmitted by using different antenna array elements. When one transceiver apparatus includes N RF channel submodules, and the phased array submodule 102 includes M antenna array elements, the phased array submodule 102 implements N-TO-M mapping between the N RF channel submodules and the M antenna array elements.

Further, the interface module 103 further includes: a baseband signal transmission interface 1031 configured to transmit a baseband signal and a multi-module expansion interface 1032 configured to execute multi-module expansion connection. The baseband signal transmission interface may be a common public radio interface (CPRI, Common Public Radio Interface). The common public radio interface transmits a baseband signal in a digital manner, and defines an interface relationship between a baseband processing control unit and a baseband transceiver unit; and a data structure of the common public radio interface may be directly used for remote transmission of data of a repeater, and therefore, and the common public radio interface becomes a remote system of a base station.

The multi-module expansion interface further includes a clock synchronization interface for clock synchronization among a plurality of multi-beam forming apparatuses that are combined and a multi-module correction interface for physical signal correction among the plurality of multi-beam forming apparatuses that are combined. A plurality of transceiver apparatuses in the embodiment shown in FIG. 1 can be combined by using the multi-module expansion interface, so as to form a relatively large-scale MIMO base station.

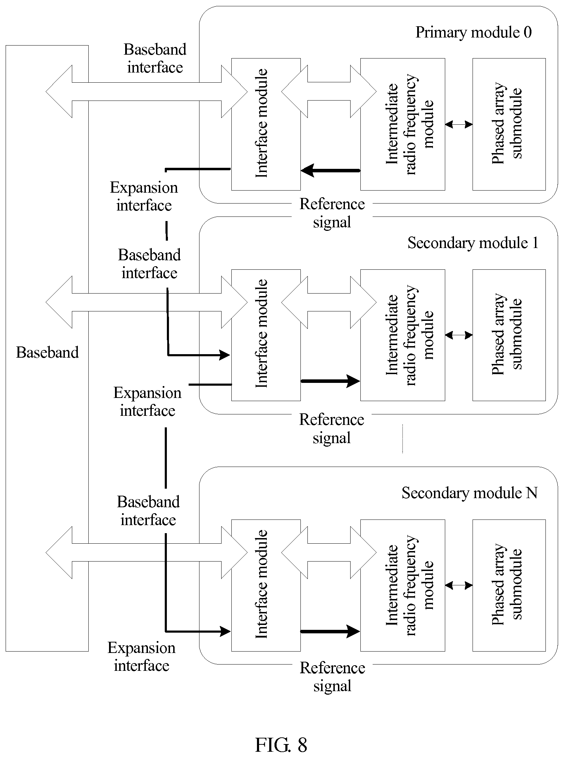

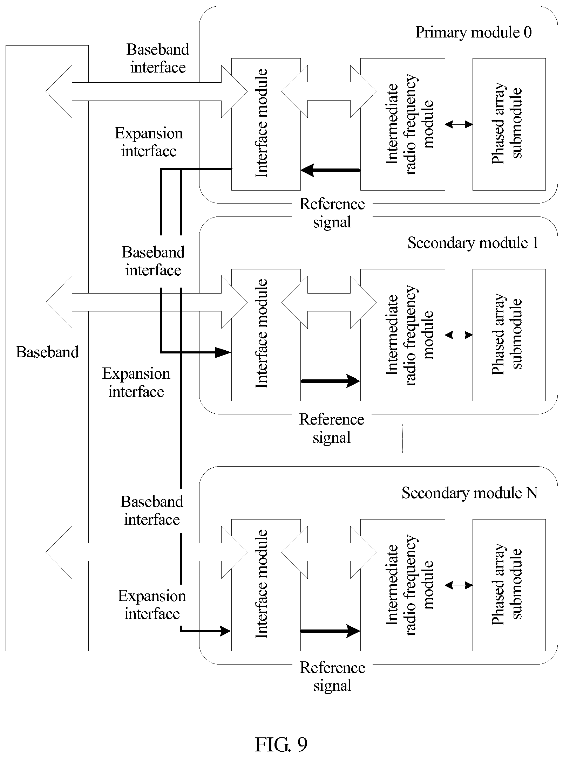

For example, FIG. 8 and FIG. 9 show two implementation methods for expansion of a plurality of multi-beam modules. When a plurality of multi-beam forming apparatuses is combined, one multi-beam forming apparatus is configured to be a primary module, and other multi-beam forming apparatuses are configured to be secondary modules. As shown in FIG. 8 and FIG. 9, a multi-module expansion interface of the primary module outputs all signals or one signal of a clock signal, a frequency synchronization signal, or a channel correction signal, and a multi-module expansion interface of a secondary module inputs all reference signals or one signal of the clock signal, the frequency synchronization signal, or the channel correction signal.

According to different connection methods, a reference signal of the secondary module may be directly from the primary module, as shown in FIG. 9, or may be from an expansion interface of an upper-level secondary module, as shown in FIG. 8.

For example, among S multi-beam forming apparatuses in FIG. 8, one multi-beam forming apparatus is configured to be a primary module 0, other N multi-beam forming apparatuses are configured to be secondary modules 1-N, and the N multi-beam forming apparatuses are connected to the external baseband data unit by using baseband signal transmission interfaces in interface modules of the N multi-beam forming apparatuses, so as to transmit a baseband signal. Among the S multi-beam forming apparatuses, the primary module is connected to a secondary module 1 by using a multi-module expansion interface, the secondary module 1 is further connected to a multi-module expansion interface of a secondary module 2 by using the multi-module expansion interface of the secondary module 1, and by analogy, a secondary module N and a preceding secondary module are connected by using multi-module expansion interfaces of the secondary module N and the preceding secondary module. A reference signal of the secondary module 1, for example, at least one signal of: the reference signals such as the clock signal, the frequency synchronization signal, and the channel correction signal, is from the primary module 0, and a reference signal of the secondary module 2 is from the secondary module 1. By analogy, a chain-shaped serial structure is formed.

In another implementation manner, among S multi-beam forming apparatuses in FIG. 9, one multi-beam forming apparatus is configured to be a primary module 0, other N multi-beam forming apparatuses are configured to be secondary modules 1-N, and the N multi-beam forming apparatuses are connected to the external baseband data unit by using baseband signal transmission interfaces in interface modules of the N multi-beam forming apparatuses, so as to transmit a baseband signal. Among the S multi-beam forming apparatuses, multi-module expansion interfaces of one primary module among the S multi-beam forming apparatuses is connected to multi-module expansion interfaces of at least two secondary modules, and the primary module has a plurality of multi-module expansion interfaces, and may be simultaneously connected to multi-module expansion interfaces of the plurality of secondary modules 1-N by using the multi-module expansion interfaces, so as to form a tree structure. Reference signals of the secondary modules, for example reference signals such as the clock signal, the frequency synchronization signal, and the channel correction signal, are all from the primary module 0.

In addition, according to different requirements, the two implementation manners in FIG. 8 and FIG. 9 may be combined. For example, a primary module is connected to a plurality of secondary modules, and one or more secondary modules connected to the primary module serve as first-level secondary modules. A first-level secondary module may be further connected to one or more secondary modules, the secondary modules serve as second-level secondary modules, and so on. A reference signal of the first-level secondary module is from the primary module, a reference signal of the second-level secondary module is from the first-level secondary module, and details are not described herein.

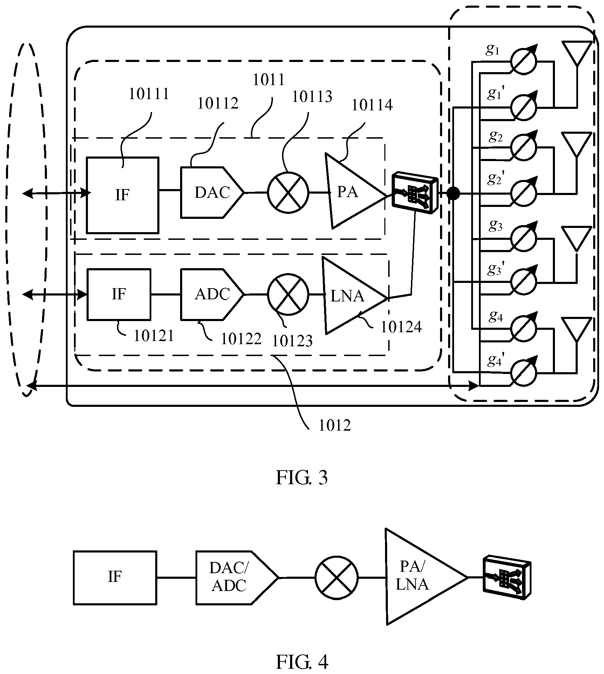

Further, referring to FIG. 3, the radio frequency channel submodule 101 further includes a transmit signal processing unit 1011 and a receive signal processing unit 1012. The transmit signal processing unit 1011 and the receive signal processing unit 1012 share one duplexer, and the duplexer is connected to the phased array submodule.

The transmit signal processing unit 1011 includes a first intermediate frequency (intermediate frequency, IF) processor 10111, a digital-to-analog converter (digital-to-analog converter, DAC) 10212, an up-conversion mixer 10113, and a power amplifier (power amplifier, PA) 10114. The first intermediate frequency processor 10111 receives the baseband signal transmitted by the interface module 103, performs intermediate frequency processing on the baseband signal, and then sends the baseband signal obtained after the intermediate frequency processing to the digital-to-analog converter 10112. The digital-to-analog converter 10112 converts the baseband signal obtained after the intermediate frequency processing into an analog signal, and sends the analog signal to the up-conversion mixer 10113. The up-conversion mixer 10113 converts the analog signal of intermediate frequency into the radio frequency signal. The radio frequency signal is sent to the phased array submodule 102 by using the duplexer.

The receive signal processing unit 1012 includes: a second intermediate frequency (IF) processor 10121, an analog-to-digital converter (analog-to-digital converter, ADC) 10122, a down-conversion mixer 10123, and a low noise amplifier (Low Noise Amplifier, LNA) 10124. The low noise amplifier 10124 performs low noise amplification processing on an antenna signal received by the duplexer from the phased array submodule 102, and then sends the antenna signal obtained after the low noise amplification processing to the down-conversion mixer 10123. The down-conversion mixer 10123 processes the antenna signal obtained after the low noise amplification processing to obtain an intermediate frequency analog signal, and sends the intermediate frequency analog signal to the analog-to-digital converter 10122. The analog-to-digital converter 10122 converts the intermediate frequency analog signal into an intermediate frequency digital signal, and then sends the intermediate frequency digital signal to the second intermediate frequency processor 10121. The second intermediate frequency processor 10121 converts the intermediate frequency digital signal into the baseband signal. The baseband signal is transmitted to the outside by using the interface module 103.

As shown in FIG. 4, in an actual application, the receive signal processing unit 1012 and the transmit signal processing unit 1011 may be integrated together, so as to reduce occupied space.

According to the multi-beam forming apparatus provided in this embodiment of the present invention, a general beam forming apparatus is modularized, so that a plurality of modules or an extremely large quantity of modules can be rapidly combined and joined to meet different application arrangement requirements, which avoids complex integrated design. In addition, because the apparatus is provided with a unique inter-module combination interface, arrangement and combination of any module is well supported, thereby achieving great flexibility.

Embodiments shown in FIG. 1 to FIG. 4 may be applied to a base station, and the base station may be a macro base station, or may be a pico base station. The base station includes S multi-beam forming apparatuses, and a multi-beam forming apparatus includes at least one radio frequency channel submodule, a phased array submodule, and an interface module. The phased array submodule includes at least two antenna array elements. S is a natural number greater than or equal to 1, and may be specifically selected according to a scale and transmit power of the base station. For a specific structure of a multi-beam forming transceiver apparatus included in each base station, reference may be made to embodiments shown in FIG. 1 to FIG. 3, and details are not described herein.

Referring to FIG. 8 and FIG. 9, when S is greater than 1, the S multi-beam forming apparatuses are connected by using a multi-module expansion interfaces; one of the S multi-beam forming apparatuses is a primary module; other (S-1) multi-beam forming apparatuses are secondary modules; and the primary module outputs reference signals for clock and frequency synchronization and channel correction to at least one secondary module by using a multi-module expansion interface.

As shown in FIG. 9, one primary module among the S multi-beam forming apparatuses is connected to at least two secondary modules, and the at least two secondary modules receive, by using multi-module expansion interfaces, the reference signals for clock and frequency synchronization and channel correction that is transmitted by the primary module.

As shown in FIG. 8, the S multi-beam forming apparatuses are connected in a chain; one of the S multi-beam forming apparatuses is a primary module, and other (S-1) multi-beam forming apparatuses are secondary modules. The primary module outputs the reference signals for clock and frequency synchronization and channel correction to one secondary module by using the multi-module expansion interface; and each secondary module receives, by using a multi-module expansion interface of each secondary module, the reference signals for clock and frequency synchronization and channel correction from the multi-beam forming apparatus connected to the secondary module.

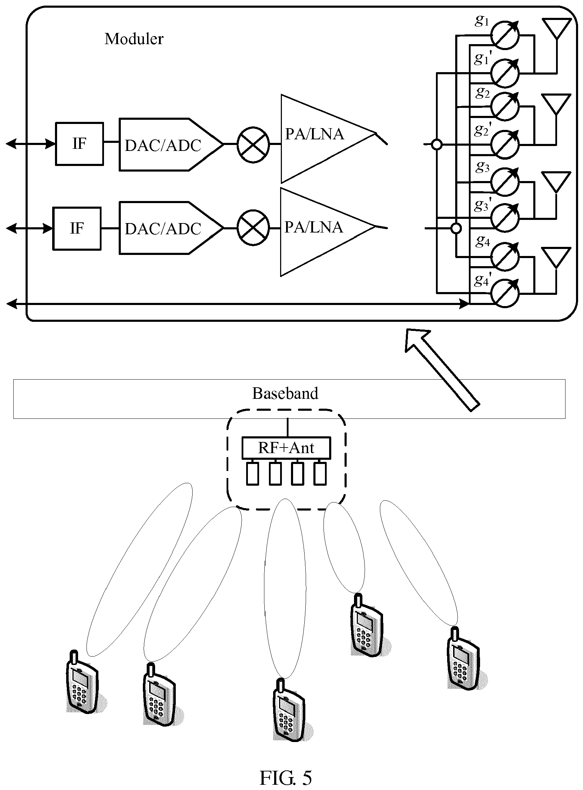

FIG. 5 is a structural diagram of a base station according to an embodiment of the present invention. In this embodiment, a base station shown in FIG. 4 is a micro base station. The micro base station includes only one multi-beam forming apparatus. The multi-beam forming apparatus includes N (N ≧ 1) RF channel submodules and a phased array submodule including M (M >> N) antenna array elements. The phased array submodule implements N-to-M mapping between the N RF channels and the M antenna array elements. The base station in this embodiment can be conveniently deployed in an indoor scenario and the like.

In addition, in this embodiment of the present invention, a large-scale antenna base station system including S (S > 1) multi-beam forming apparatuses may be further formed. In this case, each sub multi-beam forming apparatus unit includes N (N ≧ 1) RF channel submodules and a phased array submodule including M (M >> N) antenna array elements, and the phased array submodule implements N-to-M phased-array mapping between the N RF channels and the M antenna array elements.

Spacings between the spatially arranged S modules may be identical or different. Each beam forming apparatus implements expansion between a plurality of beam forming apparatuses by using an interface module.

The BS may be a large scale array including the S (S > 1) multi-beam forming apparatuses, and a quantity and positional distribution of the modules may be flexibly configured according to actual deployment and a scenario requirement.

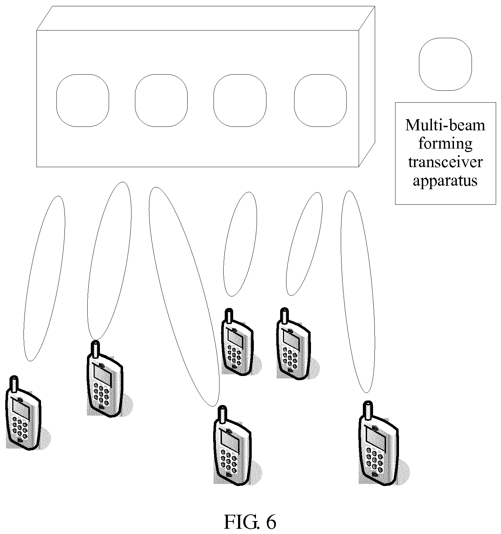

For example, an embodiment shown in FIG. 6 is a large scale antenna base station system including S (S > 1) multi-beam forming apparatuses that are in one-dimensional arrangement. In this embodiment, the S multi-beam forming apparatuses are spatially arranged in a one-dimensional linear manner, and arrangement of a plurality of modules may be linearly arranged in a horizontal or vertical direction. Spacings between spatially arranged S modules may be identical or different. An antenna array on a BS side is a one-dimensional linear array including a plurality of multi-beam forming apparatuses; a spatial arrangement direction includes, but not limited to, the horizontal or vertical direction; a quantity of the modules may be flexibly selected according to actual deployment and a scenario requirement; and one-dimensional beam control is implemented.

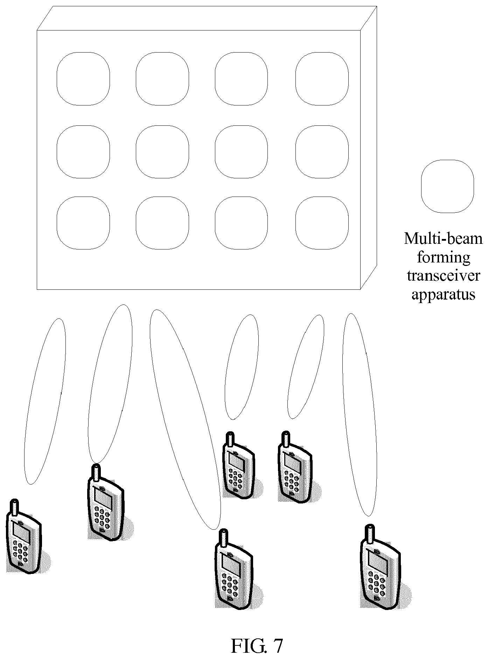

For another example, an embodiment shown in FIG. 7 is a large scale antenna base station including S (S > 1) multi-beam forming apparatuses that are in two-dimensional arrangement. In this embodiment, the S multi-beam forming apparatuses are spatially arranged in a two-dimensional manner, and a plurality of modules may be arranged in horizontal and vertical directions to form a rectangular structure. An antenna array on a BS side is in two-dimensional plane array arrangement including S (S > 1) multi-beam forming apparatuses; the modules may be flexibly configured according to actual deployment and a scenario requirement, which includes flexibly configuring quantities and positional distribution of the modules in different dimensions and the like according to the actual deployment and the scenario requirement; and two-dimensional beam control is implemented.

In another embodiment, S (S > 1) multi-beam forming apparatuses form a large scale antenna base station system. The S multi-beam forming apparatuses are spatially arranged in a three-dimensional manner. A plurality of modules may be spatially arranged in a three-dimensional manner, and an arrangement manner thereof may be a cylindrical shape or any irregular shape. An antenna array on a BS side is in three-dimensional arrangement including S (S > 1) multi-beam forming apparatuses, and is in arrangement of any shape. The modules may be flexibly configured according to actual deployment and a scenario requirement, which includes flexibly configuring quantities and positional distribution of the modules in different dimensions and the like according to the actual deployment and the scenario requirement; and beam control is implemented.

The multi-beam forming apparatus provided in the embodiments of the present invention may be applied to a large scale antenna system, to implement flexible combination and configuration of a quantity and spatial positions of antennas. Further, because modular design is used, for example, some antenna modules may be directly replaced after a faulty occurs, rapid and convenient repair and maintenance can be implemented in a later period.

The multi-beam forming apparatus provided in the embodiments of the present invention can increase a system capacity of MIMO in a large scale.

According to the multi-beam forming apparatus provided in the embodiments of the present invention, a general beam forming apparatus is modularized, so that a plurality of modules or an extremely large quantity of modules can be rapidly combined and joined to meet different application arrangement requirements, which avoids complex integrated design. In addition, because the apparatus is provided with a unique inter-module combination interface, arrangement and combination of any module is well supported, thereby achieving great flexibility.

A person skilled in the art may further appreciate that, in combination with the embodiments disclosed in this specification, units and algorithm steps in the described examples may be implemented by electronic hardware, computer software, or a combination thereof. In order to clearly describe the interchangeability between the hardware and the software, the foregoing has generally described compositions and steps of every embodiment according to functions. Whether the functions are executed by hardware or software depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, steps of the method or algorithm described may be implemented using hardware, a software module executed by a processor, or the combination thereof. The software module may be placed in a random access memory (RAM), a memory, a read-only memory (ROM), an electrically programmable ROM, an electrically-erasable programmable ROM, a register, a hard disk, a removable magnetic disk, a CD-ROM or any storage medium of other forms well-known in the art.

The foregoing specific embodiments describe the objective, technical solutions, and beneficial effects of the present invention in further detail. It should be understood that the foregoing descriptions are merely the specific embodiments of the present invention, but not intended to limit the protection scope of the present invention. Any modification, equivalent replacement, or improvement made without departing from principle of the present invention shall fall within the protection scope of the present invention.

## Claims

1. A base station, comprising S multi-beam forming apparatuses, wherein S is a natural number greater than 1;
wherein each multi-beam forming apparatus comprises:
a phased array submodule (102), an interface module (103), and at least one radio frequency channel submodule (101); wherein
the interface module (103) is configured to transmit a baseband signal of a baseband data unit external to the base station to the radio frequency channel submodule (101); the radio frequency channel submodule (101) is configured to convert the baseband signal received by the interface module (103) from the outside into a radio frequency signal, and to send the radio frequency signal to the phased array submodule (102); and the phased array submodule (102) is configured to perform beam forming on the radio frequency signal sent by the radio frequency channel submodule (101), and then to send, by using an antenna array, the radio frequency signal obtained after the beam forming;
wherein the interface module (103) of each multi-beam forming apparatus further comprises a multi-module expansion interface (1032) that is connected to the multi-module expansion interface (1032) of another multi-beam forming apparatus of the base station; and
wherein the multi-module expansion interface (1032) comprises:
a clock synchronization interface for clock synchronization among a plurality of multi-beam forming apparatuses, a frequency synchronization interface for frequency synchronization among a plurality of multi-beam forming apparatuses that are combined, and a multi-module correction interface for physical signal correction among a plurality of multi-beam forming apparatuses that are combined.

2. The base station according to claim 1, wherein the phased array submodule (102) of each multi-beam forming apparatus is configured to send a radio frequency signal received from the antenna array to the corresponding radio frequency channel submodule (101); the radio frequency channel submodule (101) is configured to convert the radio frequency signal received by the phased array submodule (102) into a baseband signal, and then to send the baseband signal to the corresponding interface module (103); and the interface module (103) is configured to output the baseband signal to the external baseband data unit.

3. The base station according to claim 1, wherein the radio frequency channel submodule (101) of each multi-beam forming apparatus comprises a transmit signal processing unit (1011); the transmit signal processing unit (1011) comprises a first intermediate frequency processor (10111), a digital-to-analog converter (10112), an up-conversion mixer (10113), and a power amplifier (10114); the first intermediate frequency processor (10111) is configured to receive the baseband signal transmitted by the corresponding interface module (103), to perform intermediate frequency processing on the baseband signal, and then to send the baseband signal obtained after the intermediate frequency processing to the digital-to-analog converter (10112); the digital-to-analog converter (10112) is configured to convert the baseband signal obtained after the intermediate frequency processing into an analog signal, and to send the analog signal to the up-conversion mixer (10113); the up-conversion mixer (10113) is configured to convert the analog signal of intermediate frequency into the radio frequency signal; and to send the radio frequency signal to the corresponding phased array submodule (102) by using a duplexer.

4. The base station according to claim 2, wherein the radio frequency channel submodule (101) of each multi-beam forming apparatus further comprises a receive signal processing unit (1012); the receive signal processing unit (1012) comprises a second intermediate frequency processor (10121), an analog-to-digital converter (10122), a down-conversion mixer (10123), and a low noise amplifier (10124); the low noise amplifier (10124) is configured to perform low noise amplification processing on an antenna signal received by a duplexer from the corresponding phased array submodule (102), and then to send the antenna signal obtained after the low noise amplification processing to the down-conversion mixer (10123); the down-conversion mixer (10123) is configured to process the antenna signal obtained after the low noise amplification processing to obtain an intermediate frequency analog signal, and to send the intermediate frequency analog signal to the analog-to-digital converter (10122); the analog-to-digital converter (10122) is configured to convert the intermediate frequency analog signal into an intermediate frequency digital signal, and then to send the intermediate frequency digital signal to the second intermediate frequency processor (10121); the second intermediate frequency processor (10121) is configured to convert the intermediate frequency digital signal into the baseband signal; and the corresponding interface module (103) is configured to transmit the baseband signal to the external baseband data unit.

5. The base station according to any one of claims 1 to 4, wherein the interface module (103) of each multi-beam forming apparatus further comprises a baseband signal transmission interface (1031) configured to transmit the baseband signal.

6. The base station according to any one of claims 1 to 5, wherein the S multi-beam forming apparatuses are connected to an external baseband data unit by using baseband signal transmission interfaces (1031) of the S multi-beam forming apparatuses; one of the S multi-beam forming apparatuses is a primary module, and other (S-1) multi-beam forming apparatuses are secondary modules; wherein the primary module is configured to output: a clock signal, a frequency synchronization signal, and a channel correction signal to at least one secondary module by using the multi-module expansion interface.

7. The base station according to claim 6, wherein the multi-module expansion interface (1032) of the primary module of the S multi-beam forming apparatuses is connected to multi-module expansion interfaces (1032) of at least two secondary modules, and the at least two secondary modules are configured to receive from the primary module, by using the multi-module expansion interfaces of the at least two secondary modules: the clock signal, the frequency synchronization signal, and the channel correction signal.

8. The base station according to claim 6, wherein the S multi-beam forming apparatuses are connected in a chain by using the multi-module expansion interfaces (1032) of the S multi-beam forming apparatuses.

## Patentansprüche

1. Basisstation, umfassend S Mehrfachstrahlformungsapparate, wobei S eine natürliche Zahl größer 1 ist;
wobei jeder Mehrfachstrahlformungsapparat umfasst:
ein phasengesteuertes Gruppenteilmodul (102), ein Schnittstellenmodul (103) und zumindest ein Funkfrequenzkanalteilmodul (101), wobei
das Schnittstellenmodul (103) konfiguriert ist, ein Basisbandsignal einer Basisbanddateneinheit extern zur Basisstation an das Funkfrequenzkanalteilmodul (101) zu senden; das Funkfrequenzkanalteilmodul (101) konfiguriert ist, das Basisbandsignal, das durch das Schnittstellenmodul (103) von außen empfangen wird, in ein Funkfrequenzsignal umzuwandeln und das Funkfrequenzsignal an das phasengesteuerten Gruppenteilmodul (102) zu senden; und das phasengesteuerte Gruppenteilmodul (102) konfiguriert ist, ein Strahlformen an dem Funkfrequenzsignal durchzuführen, das durch das Funkfrequenzkanalteilmodul (101) gesendet wird, und dann unter Verwendung einer Antennengruppe das Funkfrequenzsignal, das nach der Strahlformung erhalten wird, zu senden;
wobei das Schnittstellenmodul (103) jedes Mehrfachstrahlformungsapparats ferner eine Mehrfachmodulerweiterungsschnittstelle (1032) umfasst, die mit der Mehrfachmodulerweiterungsschnittstelle (1032) eines anderen Mehrfachstrahlformungsapparats der Basisstation verbunden ist; und
wobei die Mehrfachmodulerweiterungsschnittstelle (1032) umfasst:
eine Taktsynchronisationsschnittstelle zur Taktsynchronisation unter einer Vielzahl von Mehrfachstrahlformungsapparaten, eine Frequenzsynchronisationsschnittstelle zur Frequenzsynchronisation unter einer Vielzahl von Mehrfachstrahlformungsapparaten, die kombiniert sind, und eine Mehrfachmodulkorrekturschnittstelle für eine physische Signalkorrektur unter einer Vielzahl von Mehrfachstrahlformungsapparaten, die kombiniert sind.

2. Basisstation nach Anspruch 1, wobei das phasengesteuerte Gruppenteilmodul (102) jedes Mehrfachstrahlformungsapparats konfiguriert ist, ein Funkfrequenzsignal, das von der Antennengruppe empfangen wird, an das entsprechende Funkfrequenzkanalteilmodul (101) zu senden; das Funkfrequenzkanalteilmodul (101) konfiguriert ist, das Funkfrequenzsignal, das durch das phasengesteuerte Gruppenteilmodul (102) empfangen wird, in ein Basisbandsignal umzuwandeln und dann das Basisbandsignal an das entsprechende Schnittstellenmodul (103) zu senden; und das Schnittstellenmodul (103) konfiguriert ist, das Basisbandsignal an die externe Basisbanddateneinheit auszugeben.

3. Basisstation nach Anspruch 1, wobei das Funkfrequenzkanalteilmodul (101) jedes Mehrfachstrahlformungsapparats eine Sendesignalverarbeitungseinheit (1011) umfasst; die Sendesignalverarbeitungseinheit (1011) einen ersten Zwischenfrequenzprozessor (10111), einen Digital/Analog-Wandler (10112), einen Aufwärtswandlungsmischer (10113) und einen Leistungsverstärker (10114) umfasst; der erste Zwischenfrequenzprozessor (10111) konfiguriert ist, das Basisbandsignal zu empfangen, das durch das entsprechende Schnittstellenmodul (103) gesendet wird, um eine Zwischenfrequenzverarbeitung an dem Basisbandsignal durchzuführen und dann das Basisbandsignal, das nach der Zwischenfrequenzverarbeitung erhalten wird, an den Digital/Analog-Wandler (10112) zu senden; der Digital/Analog-Wandler (10112) konfiguriert ist, das Basisbandsignal, das nach der Zwischenfrequenzverarbeitung erhalten wird, in ein analoges Signal umzuwandeln und das analoge Signal an den Aufwärtswandlungsmischer (10113) zu senden; der Aufwärtswandlungsmischer (10113) konfiguriert ist, das analoge Signal einer Zwischenfrequenz in das Funkfrequenzsignal umzuwandeln; und das Funkfrequenzsignal unter Verwendung eines Duplexers an das entsprechende phasengesteuerte Gruppenteilmodul (102) zu senden.

4. Basisstation nach Anspruch 2, wobei das Funkfrequenzkanalteilmodul (101) jedes Mehrfachstrahlformungsapparats ferner eine Empfangssignalverarbeitungseinheit (1012) umfasst; die Empfangssignalverarbeitungseinheit (1012) einen zweiten Zwischenfrequenzprozessor (10121), einen Digital/Analog-Wandler (10122), einen Abwärtswandlungsmischer (10123) und einen rauscharmen Verstärker (10124) umfasst; der rauscharme Verstärker (10124) konfiguriert ist, eine rauscharme Verstärkungsverarbeitung an einem Antennensignal durchzuführen, das durch einen Duplexer von dem entsprechenden phasengesteuerten Gruppenteilmodul (102) empfangen wird, und dann das Antennensignal, das nach der rauscharmen Verstärkungsverarbeitung erhalten wird, an den Abwärtswandlungsmischer (10123) zu senden; der Abwärtswandlungsmischer (10123) konfiguriert ist, das Antennensignal, das nach der rauscharmen Verstärkungsverarbeitung erhalten wird, zu verarbeiten, um ein analoges Zwischenfrequenzsignal zu erhalten und das analoge Zwischenfrequenzsignal an den Analog/Digital-Wandler (10122) zu senden; der Analog/Digital-Wandler (10122) konfiguriert ist, das analoge Zwischenfrequenzsignal in ein digitales Zwischenfrequenzsignal umzuwandeln und dann das digitale Zwischenfrequenzsignal an den zweiten Zwischenfrequenzprozessor (10121) zu senden; der zweite Zwischenfrequenzprozessor (10121) konfiguriert ist, das digitale Zwischenfrequenzsignal in das Basisbandsignal umzuwandeln; und das entsprechende Schnittstellenmodul (103) konfiguriert ist, das Basisbandsignal an die externe Basisbanddateneinheit zu senden.

5. Basisstation nach einem der Ansprüche 1 bis 4, wobei das Schnittstellenmodul (103) jedes Mehrfachstrahlformungsapparats ferner eine Basisbandsignalsendungsschnittstelle (1031) umfasst, die konfiguriert ist, das Basisbandsignal zu senden.

6. Basisstation nach einem der Ansprüche 1 bis 5, wobei die S Mehrfachstrahlformungsapparate mit einer externen Basisbanddateneinheit unter Verwendung von Basisbandsignalsendungsschnittstellen (1031) der S Mehrfachstrahlformungsapparate verbunden sind; einer der S Mehrfachstrahlformungsapparate ein primäres Modul ist und andere (S-1) Mehrfachstrahlformungsapparate sekundäre Module sind; wobei das primäre Modul konfiguriert ist, ein Taktsignal, ein Frequenzsynchronisationssignal und ein Kanalkorrektursignal unter Verwendung der Mehrfachmodulerweiterungsschnittstelle an zumindest ein sekundäres Modul auszugeben.

7. Basisstation nach Anspruch 6, wobei die Mehrfachmodulerweiterungsschnittstelle (1032) des primären Moduls der S Mehrfachstrahlformungsapparate mit Mehrfachmodulerweiterungsschnittstellen (1032) von zumindest zwei sekundären Modulen verbunden ist und die zumindest zwei sekundären Module konfiguriert sind, von dem primären Modul, unter Verwendung der Mehrfachmodulerweiterungsschnittstellen der zumindest zwei sekundären Module das Taktsignal, das Frequenzsynchronisationssignal und das Kanalkorrektursignal zu empfangen.

8. Basisstation nach Anspruch 6, wobei die S Mehrfachstrahlformungsapparate unter Verwendung der Basisbandsignalerweiterungsschnittstellen (1032) der S Mehrfachstrahlformungsapparate in Kette verbunden sind.

## Revendications

1. Station de base comprenant S appareils de formation de multiples faisceaux, dans laquelle S est un nombre entier naturel supérieur à 1 ;
dans laquelle chaque appareil de formation de multiples faisceaux comprend :
un sous-module de réseau phasé (102), un module d'interface (103) et au moins un sous-module de canal radiofréquence (101) ; dans laquelle
le module d'interface (103) est configuré pour transmettre un signal de bande de base d'une unité de données de bande de base externe à la station de base au sous-module de canal radiofréquence (101) ; le sous-module de canal radiofréquence (101) est configuré pour convertir le signal de bande de base reçu par le module d'interface (103) depuis l'extérieur en un signal radiofréquence et pour envoyer le signal radiofréquence au sous-module de réseau phasé (102) ; et le sous-module de réseau phasé (102) est configuré pour effectuer une formation de faisceau sur le signal radiofréquence envoyé par le sous-module de canal radiofréquence (101) et, ensuite, pour envoyer, en utilisant un réseau d'antennes, le signal radiofréquence obtenu après la formation de faisceau ;
dans laquelle le module d'interface (103) de chaque appareil de formation de multiples faisceaux comprend en outre une interface d'extension à modules multiples (1032) qui est raccordée à l'interface d'extension à modules multiples (1032) d'un autre appareil de formation de multiples faisceaux de la station de base ; et
dans laquelle l'interface d'extension à modules multiples (1032) comprend :
une interface de synchronisation d'horloge pour une synchronisation d'horloge entre une pluralité d'appareils de formation de multiples faisceaux, une interface de synchronisation de fréquence pour une synchronisation de fréquence entre une pluralité d'appareils de formation de multiples faisceaux qui sont combinés, et une interface de correction à modules multiples pour une correction de signal physique entre une pluralité d'appareils de formation de multiples faisceaux qui sont combinés.

2. Station de base selon la revendication 1, dans laquelle le sous-module de réseau phasé (102) de chaque appareil de formation de multiples faisceaux est configuré pour envoyer un signal radiofréquence reçu du réseau d'antennes au sous-module de canal radiofréquence correspondant (101) ; le sous-module de canal radiofréquence (101) est configuré pour convertir le signal radiofréquence reçu par le sous-module de réseau phasé (102) en un signal de bande de base et, ensuite, pour envoyer le signal de bande de base au module d'interface correspondant (103) ; et le module d'interface (103) est configuré pour transmettre le signal de bande de base à l'unité de données de bande de base externe.

3. Station de base selon la revendication 1, dans laquelle le sous-module de canal radiofréquence (101) de chaque appareil de formation de multiples faisceaux comprend une unité de traitement de signal de transmission (1011) ; l'unité de traitement de signal de transmission (1011) comprend un premier processeur de fréquence intermédiaire (10111), un convertisseur numérique-analogique (10112), un mélangeur de conversion ascendante (10113) et un amplificateur de puissance (10114) ; le premier processeur de fréquence intermédiaire (10111) est configuré pour recevoir le signal de bande de base transmis par le module d'interface correspondant (103), pour effectuer un traitement de fréquence intermédiaire sur le signal de bande de base et, ensuite, pour envoyer le signal de bande de base obtenu après le traitement de fréquence intermédiaire au convertisseur numérique-analogique (10112); le convertisseur numérique-analogique (10112) est configuré pour convertir le signal de bande de base obtenu après le traitement de fréquence intermédiaire en signal analogique et pour envoyer le signal analogique au mélangeur de conversion ascendante (10113) ; le mélangeur de conversion ascendante (10113) est configuré pour convertir le signal analogique d'une fréquence intermédiaire en signal radiofréquence ; et pour envoyer le signal radiofréquence au sous-module de réseau phasé (102) en utilisant un duplexeur.

4. Station de base selon la revendication 2, dans laquelle le sous-module de canal radiofréquence (101) de chaque appareil de formation de multiples faisceaux comprend en outre une unité de traitement de signal de réception (1012) ; l'unité de traitement de signal de réception (1012) comprend un second processeur de fréquence intermédiaire (10121), un convertisseur analogique-numérique (10122), un mélangeur de conversion descendante (10123) et un amplificateur à faible bruit puissance (10124) ; l'amplificateur à faible bruit puissance (10124) est configuré pour effectuer un traitement d'amplification à faible bruit sur un signal d'antenne reçu par un duplexeur en provenance du module de réseau phasé correspondant (102) et, ensuite, pour envoyer le signal d'antenne obtenu après le traitement d'amplification à faible bruit au mélangeur de conversion descendante (10123) ; le mélangeur de conversion descendante (10123) est configuré pour traiter le signal d'antenne obtenu après le traitement d'amplification à faible bruit pour obtenir un signal analogique de fréquence intermédiaire et pour envoyer le signal analogique de fréquence intermédiaire au convertisseur analogique-numérique (10122), le convertisseur analogique-numérique (10122) est configuré pour convertir le signal analogique de fréquence intermédiaire en un signal numérique de fréquence intermédiaire et, ensuite, pour envoyer le signal numérique de fréquence intermédiaire au second processeur de fréquence intermédiaire (10121) ; le second processeur de fréquence intermédiaire (10121) est configuré pour convertir le signal numérique de fréquence intermédiaire en signal de bande de base ; et le module d'interface correspondant (103) est configuré pour transmettre le signal de bande de base à l'unité de données de bande de base externe.

5. Station de base selon l'une quelconque des revendications 1 à 4, dans laquelle le module d'interface (103) de chaque appareil de formation de multiples faisceaux comprend en outre une interface de transmission de signal de bande de base (1031) configurée pour transmettre le signal de bande de base.

6. Station de base selon l'une quelconque des revendications 1 à 5, dans laquelle les S appareils de formation de multiples faisceaux sont raccordés à une unité de données de bande de base externe en utilisant des interfaces de transmission de signal de bande de base (1031) des S appareils de formation de multiples faisceaux ; l'un des S appareils de formation de multiples faisceaux est un module primaire et les autres (S - 1) appareils de formation de multiples faisceaux sont des modules secondaires ; dans laquelle le module primaire est configuré pour émettre : un signal d'horloge, un signal de synchronisation de fréquence et un signal de correction de canal à au moins un module secondaire en utilisant l'interface d'extension à modules multiples.

7. Station de base selon la revendication 6, dans laquelle l'interface d'extension à modules multiples (1032) du module primaire des S appareils de formation de multiples faisceaux est raccordée à des interfaces d'extension à modules multiples (1032) d'au moins deux modules secondaires et les deux, ou plus, modules secondaires sont configurés pour recevoir du module primaire en utilisant les interfaces d'extension à modules multiples des deux, ou plus, modules secondaires : le signal d'horloge, le signal de synchronisation de fréquence et le signal de correction de canal.

8. Station de base selon la revendication 6, dans laquelle les S appareils de formation de multiples faisceaux sont raccordés dans une chaîne en utilisant les interfaces d'extension à modules multiples (1032) des S appareils de formation de multiples faisceaux.
